# EUROPÄISCHE PATENTSCHRIFT

(11) **EP 1 523 421 B1**
(45) Veröffentlichungstag und Bekanntmachung des Hinweises auf die Patenterteilung: **01.02.2006**
(21) Anmeldenummer: 03732442.3
(22) Anmeldetag: 23.05.2003
(51) Int. Cl.: B60J 7/06, B60J 7/10, B60S 1/66, B62D 33/04, B60T 17/04

(54) **VORRICHTUNG ZUR ERHÖHUNG DER VERKEHRSSICHERHEIT BEPLANTER FAHRZEUGE**
DEVICE FOR INCREASING THE ROAD SAFETY OF COVERED VEHICLES
DISPOSITIF POUR AUGMENTER LA SECURITE DE CIRCULATION DE VEHICULES BACHES

(30) Priorität: 31.05.2002 DE 10224291
(43) Veröffentlichungstag der Anmeldung: 20.04.2005
(73) Patentinhaber: K & M Stahl-, Behälter-, Fassaden- und Metallbau GmbH, 33165 Lichtenau (DE)
(72) Erfinder: KÖHLER, Johannes, 33165 Lichtenau (DE)
(74) Vertreter: Hanewinkel, Lorenz
(86) Internationale Anmeldenummer: PCT/EP2003/005382
(87) Internationale Veröffentlichungsnummer: WO 2003/101772

(56) Entgegenhaltungen:
- EP-A- 0 074 643
- EP-A- 0 078 248
- EP-A- 0 897 827
- EP-A- 1 106 409
- EP-A- 1 241 035
- WO-A-95/22472
- DE-A- 19 903 212
- US-A- 2 807 499
- US-A- 5 658 037

## Beschreibung

Die Erfindung betrifft ein Fahrzeug mit einer Abdeckplane und diese selbst, die randseitig fixiert ist und unter der ein aufblasbarer Blähkörper nach unten abgestützt angeordnet ist, der aufgeblasen die Abdeckplane mittig anhebt und seitlich abgeschrägt spannt, wobei die originäre Abdeckplane des Fahrzeugladebereiches oder Anhängers oder Aufsattlers entlang ihrem Firstbereich mit Blähkörper unterlegt ist, der untenseitig auf einer Firstleiste oder auf jeweils querstehenden Querspriegeln abgestützt ist und von einer Bedienvorrichtung aus steuerbar mit einer druckbegrenzenden Füllvorrichtung und Entleerungsvorrichtung (5) verbunden ist,

Eine derartige Vorrichtung, wie im Oberbegriff des Anspruchs 1, ist aus der EP 0 897 827A bekannt. Hierbei bestehen die Blähkörper aus mit ihrer Achse vertikal orientierten Balgen, die boden- und deckenseitig durch Platten miteinander querverbunden sind, die mit Lenkerscheren vertikal auseinanderdruckbar sind. Diese Konstruktion ist aufwendig und gewichtig.

Weiterhin zeigt die WO 95/22972 einen Blähkörper, der aus zwei übereinander gestapelt gehaltenen Schläuchen besteht. Zu der Befüllvorrichtung fehlen jegliche Angaben.

Weiterhin ist aus DE 199 03 212 A eine Seitenplane bekannt, welche aufblasbare Rippenstreifen aufweist, in denen sich Spiralfedern befinden, so daß sich die Plane, wenn sich keine Druckluft in den Rippen befindet, aufrollt.

Weiterhin zeigt die US 2 807 499 A eine Deck- und Seitenplane mit eingearbeiteten Luftkanälen, die aufgeblasen die Ausbreitung über den Dachaufbau erleichtert. Da die Kanäle rippenartig die Deckplan längs überziehen, hält sich dazwischen Wasser, Eis und Schnee.

Weiterhin ist aus der EP 0 074 643 A eine Plane bekannt, die aufblasbare Kanäle zwecks Stabilisierung enthält.

Weiterhin ist eine verspannbare Abdeckplane ist der DE 196 05 460 A1 bekannt. Hierbei handelt es sich um eine zeltgaragenartige Abdeckhaube eines Kraftfahrzeuges oder eines Teiles oder Anhängers davon. Die Randspannung wird durch einen umlaufenden aufblasbaren Schlauch erbracht und der Zentralbereich ist mit einer Stützplatte versehen, unter der ein aufblasbarer Balgenkörper oder ein Spreizer angeordnet ist, der untenseitig mit einer Trägerplatte auf dem Fahrzeugdach abgestützt ist. Aufgeblasen schützt das Zelt das Fahrzeug vor Witterungs-einflüssen. Während der Fahrt ist es vom Fahrzeug entfernt oder zusammengelegt im Fahrzeug in einem Transportraum versenkt untergebracht.

Aufgabe der Erfindung ist es, einen wesentlich einfacheren und unter Beachtung der Verkehrsvorschriften einfach zu bedienenden Wetterschutz für Nutzfahrzeuge zu schaffen, der das Entstehen von Eisansammlungen auf dem Dach verhindert, die ansonsten beim Verlassen eines Standplatzes vom Dach fliegen und nachfolgende Verkehrsteilnehmer schädigen und/oder behindern könnten.

Die Lösung besteht darin, daß von einem Motorfahrzeug eine Druckluftleitung und eine Unterdruckleitung über eine Kupplung zu der Blähvorrichtung führt, wobei die Druckluftleitung über ein Rückschlagventil in ein Reservoir führt, das über einen Minimaldruckwächter und einen Maximaldruckwächter an die Bedienvorrichtung angeschlossen ist, die mit einem Stellzylinder verbunden ist, der von dem Unterdruck beaufschlagt ist, der die Bedienvorrichtung in die Entleerungsstellung verbringt, und daß an dem Reservoir auch über ein Bremstellventil eine Bremsenlöseleitung des Anhängers, Aufsattlers oder Fahrzeuges angeschlossen sind und der Minimaldruckwächter auf einen minimalen Bremslösedruck eingestellt ist und der Maximaldruckwächter auf einen maximal zulässigen Fülldruck des Blähkörpers eingestellt ist und das Reservoir eine solche Kapazität bei einem üblichen Ladedruck des Motorfahrzeuges aufweist, daß nach dem Füllen des Blähkörpers der minimale Bremslösedruck noch überschritten ist.

Die originäre Abdeckplane des Fahrzeugladebereiches oder Anhängers oder Aufsattlers ist entlang ihres Firstbereiches mit einem Blähkörper unterlegt, der untenseitig auf einer Firstleiste oder auf jeweils querstehenden Querspriegeln abgestützt ist und von einer Bedienvorrichtung aus steuerbar mit einer druckbegrenzenden Füllvorrichtung und Entleerungsvorrichtung oder endschalterbegrenzt mit einer Spannungsquelle verbunden ist.

Die neuartige Vorrichtung nutzt die an Nutzfahrzeugen originär vorhandene Abdeckplane, die das Dach bildet und gewöhnlich über die Seiten heruntergeführt an Seitenplanken verspannt ist. Der Grad der Verspannung reicht jedoch nicht aus, die Dachseite bei Regen- und Schneelast völlig eben zu halten, so daß sich Wasser- und Eisansammlungen bilden können, die beim Wegfahren den nachfolgenden Verkehr gefährden. Erfindungsgemäß ist lediglich ein Blähkörper unter der mittigen Achse direkt unter der Plane angeordnet, der aufgebläht die Plane anspannt und mittig so anhebt, daß sie zu den Seiten schräg abfällt, so daß Niederschläge seitlich ablaufen und keine Eisplatten anwachsen.

Da die Kfz-Aufbauten häufig bis nahe an die zulässige Grenzhöhe ausgebaut sind, wird vor dem Wegfahren der Blähkörper entleert, damit die Orignalhöhe nicht überschritten ist.

Der Blähkörper ist als ein durchgehender Schlauch ausgebildet, der beispielsweise aus dem gleichen dichten, gewebearmierten Material wie die Plane besteht. Der Blähkörper wird zweckmäßig mit Verbindern in Abständen voneinander an der Plane fixiert, so daß ein beschränkter Lageausgleich zueinander beim Anspannen der Plane und beim Füllen und Entleeren des Blähkörpers gestattet ist, was Überspannungen im Schlauch und der Plane verhindert.

Der Schlauchdurchmesser ist beispielsweise 150 mm. Ein Druck von 1 - 3 bar gibt bei dieser Bemessung eine solche Hubkraft, die die gesamte Plane anhebt und ausreichend anspannt.

Die Füllung des Blähkörpers erfolgt gewöhnlich beim Abstellen des Fahrzeugs oder Anhängers mittels der Druckluft des Triebfahrzeuges. Ist dieses bereits abgekoppelt, so ist im Anhänger oder Aufsattler ein Druckluftvorrat in einem Speicher enthalten, der für ein späteres Lösen der Bremsen vorgesehen ist. Der Druckluftvorrat weist jedoch einen so hohen Überdruck auf, daß die für den Blähkörper benötigte Füllmenge, die einen geringeren Druck benötigt, problemlos aus dem Speicher entnommen werden kann, ohne die Bremslösefunktion zu beeinträchtigen.

Ist der Anhänger oder Aufsattler wieder an das Zugfahrzeug angekoppelt, steht auch ein Unterdruck zur Verfügung, der ein vollständiges Entleeren des Blähkörpers sicherstellt und diesen in einen flachen Versteifungskörper verwandelt, der ein Hochsaugen der Plane durch den vom Fahrerhaus abgelenkten Fahrtwind unterbindet und dadurch die Einhaltung der Aufbautenhöhe garantiert.

Fahrzeuge, die mit auf Seitenschienen verschieblichen Querspriegeln ausgerüstet sind, zwischen denen sich die Planenabschnitte erstrecken, lassen sich bei entlüftetem Blähkörper wegen dessen Flexibilität beim Aufschieben und Schließen mühelos handhaben.

Da die Querspriegel nur eine stellenweise Unterstützung des Blähkörpers erbringen, ist über ihnen eine Schutzpolsterung angebracht. Außerdem ist es vorteilhaft, die Gewebearmierung des Blähkörpers schrägliegend anzuordnen, so daß die Kräfte sich vom unterstützten Bereich jeweils wendelförmig in den nicht gestützten Bereich verteilen und einem Durchhängen dort entgegenwirken.

Der Druckluftverbrauch läßt sich verringern, wenn statt eines durchgehenden Schlauches einzelne miteinander verbundene Schlauchabschnitte jeweils auf einem Spriegel abgestützt werden.

In den Figuren 1 - 4 sind vorteilhafte Ausgestaltungen angegeben.
- Fig. 1: zeigt einen Querschnitt einer Dachpartie;
- Fig. 2: zeigt eine Innenansicht zur Seitenwand;
- Fig. 3: zeigt eine Innenansicht zweiter Art;
- Fig. 4: zeigt ein Schaltschema der Versorgung;

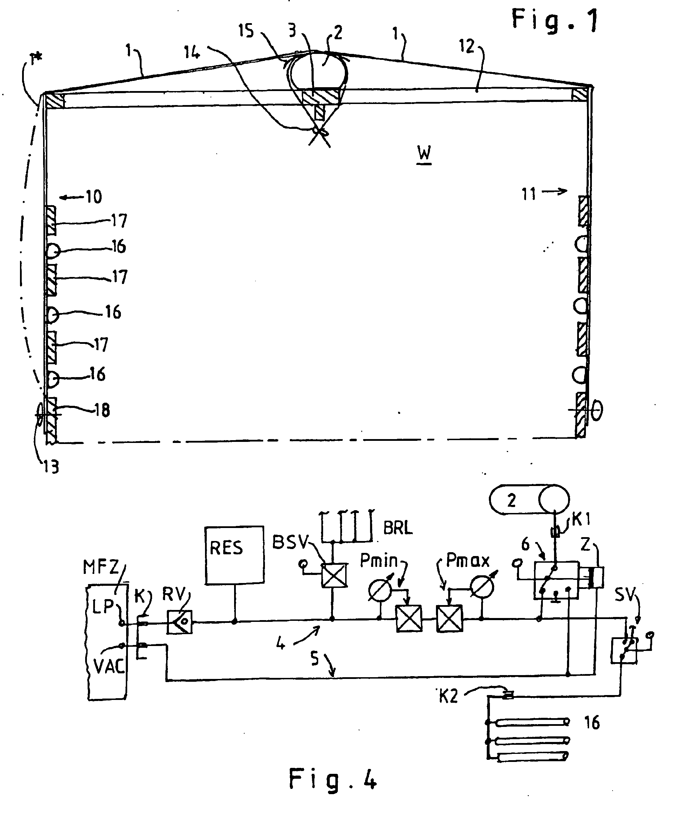

Fig. 1 zeigt einen Querschnitt einer Dachpartie eines Fahrzeuganhängers oder Aufbaues. Zwischen Seitenwänden 10, 11 erstrecken sich Traversen 12, auf denen eine Firstleiste 3 mittig axial im Dachbereich gehalten ist. Dieser Grundaufbau ist von einer Plane 1 überspannt, indem diese mit seitlichen Spannern 13 abschnittweise an den Seitenwänden 10, 11 fixiert ist. Zwischen der Firstleiste 3 und der Plane 1 ist ein schlauchartiger Blähkörper 2 angeordnet, der an der Firstleiste 3 mit Gurten oder Bändern 14 gehalten ist. An den Befestigungsstellen ist der Schlauch 2 mit schonenden Zwischenlagen 15 belegt.

Die Seitenwände 10, 11 sind häufig mit vertikal beabstandeten schmalen Planken 17 ausgebildet, über die die Plane 1 bis zum unteren Seitenbord 18 heruntergespannt ist, wo sie mit den Spannern 13 festgelegt ist. Bekanntlich besteht an der Frontpartie eines Aufbaues oder Anhängers seitlich durch den Fahrwind ein Unterdruck, der ein seitliches Ausbeulen der Plane 1*, strichpunktiert darstellt, bewirkt. Eine solche Ausbeulung stellt ein Sicherheitsrisiko dar, da es dem Fahrer die Sicht am Fahrzeug entlang im Außenspiegel weitgehend nimmt.

Dem wirkt eine Anordnung von Stabilisatoren 16 entgegen, die an den frontseitigen Seitenpartien, vorzugsweise zwischen den Planken 17, unter der Plane 1 an dieser angeordnet sind und aus aufblasbaren Schläuchen bestehen. Diese Stabilisatoren 16 werden, insbesondere während der Fahrt, mit Druckluft aufgepumpt, wenn der firstseitige Blähkörper 2 evakuiert ist. Sie lassen sich aber auch dann, wenn der Firstblähkörper 2 im Stand aufgeweitet ist, zum Nachspannen der Plane aufblähen.

Die Versorgung der Blähkörper 2 und Stabilisatoren 16 mit Druckluft erfolgt über druckfeste Schläuche. Soweit zum Entlüften Unterdruck eingesetzt wird, sind die Schläuche so dickwandig und/oder armiert, daß sie nicht kollabieren.

Die Versorgungsvorrichtung ist schematisch in Fig. 4 dargestellt. Das Motorfahrzeug MFZ liefert Druckluft LP und ggf. Unterdruck VAC über eine Kupplung K an die Ladevorrichtung, nämlich den geplanten Ladeaufbau, den Anhänger oder Aufsattler. Über ein Rückschlagventil RV wird die Druckluft LP in einem Reservoir RES in bekannter Weise gespeichert, das bei abgehängtem Ladeteil oder bei stehendem Motor die Bremsstellvorrichtung über ein Bremsstellventil BSV, das handbetätigte Zweistellungsventil zur Druckversorgung zur Bremslösung und zur Entlüftung der Bremsleitung dient. Der Entlüftungsanschluß seitens des Fahrers ist konventionell ausgeführt und hier nicht dargestellt.

Da die Bremsentlüftung einen Mindestdruck erfordert, ist die Blähvorrichtung 3 über ein Druckminimumventil Pmin an das Reservoir RES angeschlossen. Solange also der Mindestdruck bereitsteht, können der Blähkörper 2 und der Stabilisator 16 beschickt werden. Da der Bläh- oder Stabilisatordruck begrenzt sein muß, ist ein Drosselventil Pmax in die Zuleitung der Füllvorrichtung 4 eingeschaltet. Die Beschickung des Blähkörpers 2 erfolgt im einfachsten Fall mit der Bedienvorrichtung 6, einem handbetätigten 3-Stellungsventil DV, das jeweils eine Verbindung zum Aufblasen, Absperren oder Entleeren herstellt. Vorzugsweise ist dieses Ventil DV mit einem Stellzylinder Z gekoppelt, der mit der Entleervorrichtung 5 dem Unterdruck VAC so verbunden ist, daß immer dann, wenn Unterdruck herrscht, die Entlüftungsstellung eingestellt ist. Dadurch ist sichergestellt, daß der Dachfirst beim Fahren mit Sicherheit immer flachgelegt ist.

Weiterhin sind die Stabilisatoren 16 gezeigt, die an die Leitung hinter dem Druckbegrenzer Pmax über ein handbetätigbares Zwei- oder Dreiwegeventil angeschlossen ist, das ein Aufblasen und ein Entleeren zur Außenluft und/oder zum Unterdruck VAC einstellen läßt.

Fig. 2 zeigt einen vorderen Abschnitt einer Innenansicht auf einer Seite eines Laderaumes, wobei der Blähkörper 2, wie in Fig. 1, auf einer Firstleiste 3, aufgebläht gezeichnet, liegt. Die Fristleiste 3 ist in Abständen von Traversen 12 getragen, die auch obere Kantleisten 19 und Planken 17 tragen und im unteren Bereich mit dem Seitenbord 18 verbunden sind.

Die Plane 1 ist außen über alle genannten Aufbautenteile gespannt. Zwischen den beabstandeten Planken 17 sind in der Plane 1 aufgeblähte Stabilisatortaschen 16 angebracht. Sie reichen etwa von der vorderen Aufbauwand W bis 1 m nach hinten. Alle Stabilisatoren 16 sind mit einem Versorgungsschlauch untereinander und über eine Kupplung K2 mit einem gewöhnlich außen angebrachen Stabilisatorventil verbunden. Auch der firstseitige Blähkörper 2 ist über eine frontseitige Schlauchleitung, die in der Plane 1 geführt ist, über eine Kupplung K1 an ein externes Stellventil einer Bedienvorrichtung angeschlossen.

Sämtliche Kupplungen K, K1, K2 schließen beim Herausziehen des Anschlusses in bekannter Weise.

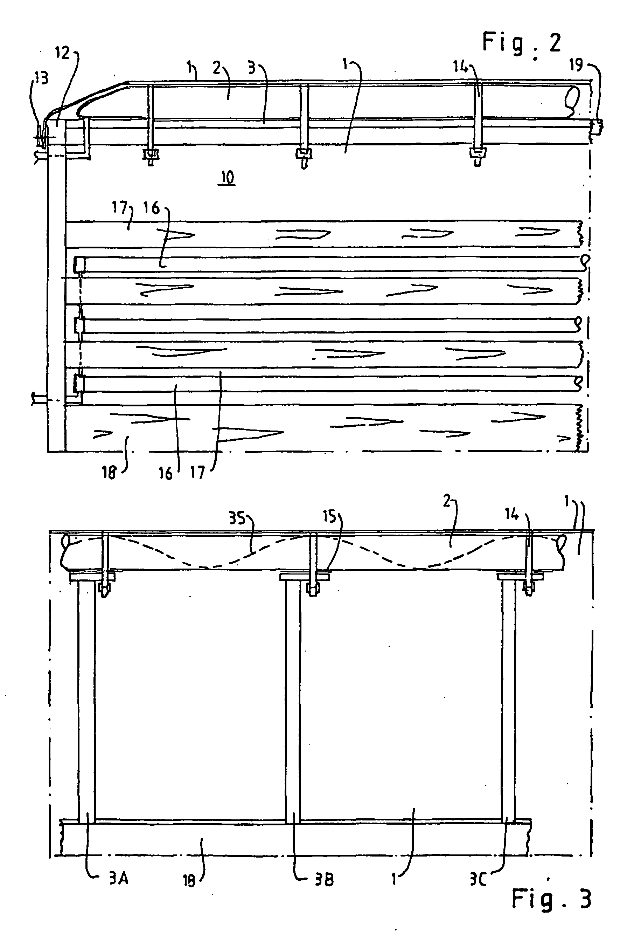

Fig. 3 zeigt einen Abschnitt einer Innenansicht einer weiteren bekannten Aufbautenausführung. Bei dieser sind Querspiegel 3A, 3B, . 3C in Abständen von jeweils 800 mm in Fahrzeuglängsrichtung nebeneinander angeordnet. Sie sind an der niedrigen Bordwand 18 in Schienen verschieblich gelagert, so daß sie zum Be- und Entladen zur Frontwand W hin zusammengeschoben werden können, wobei sich die Plane 1 in Falten dazwischen legt. Der Blähkörper 2 ist jeweils auf den Querspriegeln 3A - 3C abgestützt und durch eine armierende Einlage so stabilisiert, daß er sich zwischen den Stützen nicht durchhängt. Bevorzugt sind Zugmittel 25, z.B. mit seinen Fasern wendelförmig orientiertes Gewebe, in den Blähkörper 2 eingearbeitet. Die Fasern oder Zugstränge 35 sind biegsam oder mit geringer Dehnung auszuwählen; z.B. können dünne Stahldrähte oder Aramidfäden eingearbeitet sein.

### Bezugszeichenliste:

- 1, 1*: Abdeckplane
- 2: Blähkörper
- 3: Firstleiste
- 3A-3C: Querspriegel
- 4: Füllvorrichtung
- 5: Entleervorrichtung
- 6: Bedienvorrichtung
- 10, 11: Seitenwände
- 12: Traversen
- 13: Spanner
- 14: Bänder/Gurte
- 15, 15A: Zwischenlage
- 16: Stabilisatoren
- 17: Planken
- 18: Seitenbord
- 19: Kantleisten
- MFZ: Motorfahrzeug
- LP: Luftdruck
- VAC: Unterdruck
- RES: Reservoir für Druckluft
- BSV: Bremsstellventil
- BRL: Bremsenlöseleitungen
- K, K1, K2: Kupplungen
- DV: Füll-, Entleer-, Bedienvorrichtung 6
- SV: Stabilisatorventil
- RV: Rückschlagventil
- Pmin: Druckabfallbegrenzer
- Pmax: Druckbegrenzer
- Z: Stellzylinder

## Patentansprüche

1. Fahrzeug mit einer Abdeckplane (1) und diese selbst, die randseitig fixiert ist und unter der ein aufblasbarer Blähkörper (2) nach unten abgestützt angeordnet ist, der aufgeblasen die Abdeckplane (1) mittig anhebt und seitlich abgeschrägt spannt, wobei die originäre Abdeckplane (1) des Fahrzeugladebereiches oder Anhängers oder Aufsattlers entlang ihrem Firstbereich mit Blähkörper (2) unterlegt ist, der untenseitig auf einer Firstleiste (3) oder auf jeweils querstehenden Querspriegeln (3A - 3C) abgestützt ist und von einer Bedienvorrichtung (6) aus steuerbar mit einer druckbegrenzenden Füllvorrichtung (4) und Entleerungsvorrichtung (5) verbunden ist, **dadurch gekennzeichnet, daß** von einem Motorfahrzeug (MFZ) eine Druckluftleitung (LP) und eine Unterdruckleitung (VAC) über eine Kupplung (K) zu der Blähvorrichtung führt, wobei die Druckluftleitung (LP) über ein Rückschlagventil (RV) in ein Reservoir (RES) führt, das über einen Minimaldruckwächter (Pmin) und einen Maximaldruckwächter (Pmax) an die Bedienvorrichtung (6) angeschlossen ist, die mit einem Stellzylinder (6) verbunden ist, der von dem Unterdruck (VAC) beaufschlagt ist, der die Bedienvorrichtung (6) in die Entleerungsstellung (5) verbringt, und daß an dem Reservoir (RES) auch über ein Bremstellventil (BSV) eine Bremsenlöseleitung (BRL) des Anhängers, Aufsattlers oder Fahrzeuges angeschlossen sind und der Minimaldruckwächter (Pmin) auf einen minimalen Bremslösedruck eingestellt ist und der Maximaldruckwächter (Pmax) auf einen maximal zulässigen Fülldruck des Blähkörpers (2) eingestellt ist und das Reservoir (RES) eine solche Kapazität bei einem üblichen Ladedruck (LP) des Motorfahrzeuges (MFZ) aufweist, daß nach dem Füllen des Blähkörpers (2) der minimale Bremslösedruck noch überschritten ist.

2. Fahrzeug nach Anspruch 1, **dadurch gekennzeichnet, daß** der Blähkörper (2) als ein sich über den ganzen First erstreckender Schlauch ausgebildet ist.

3. Fahrzeug nach Anspruch 2, **dadurch gekennzeichnet, daß** zwischen der Plane (1) und dem Blähkörper (2) eine schonende Zwischenlage (15) aus Gewebe und/oder Kunststoff, Schaumstoff oder Filz, angeordnet ist.

4. Fahrzeug nach Anspruch 2 oder 3, **dadurch gekennzeichnet, daß** die Plane (1) durchgehend oder mit Bändern oder Gurten (14) verschweißt in Abständen an dem Blähkörper (2) befestigt ist.

5. Fahrzeug nach einem der vorstehenden Ansprüche, **dadurch gekennzeichnet, daß** der Blähkörper (2) mit eingearbeiteten Zugmitteln (35) gegen ein Durchbiegen stabilisiert ist.

6. Fahrzeug nach einem der vorstehenden Ansprüche, **dadurch gekennzeichnet, daß** die Zugmittel (35) wendelförmig im schlauchförmigen Blähkörper (2) angeordnet sind und aus Gewebe oder Kunststoff oder dünnen Stahldrähten bestehen.

7. Fahrzeug nach einem der vorstehenden Ansprüche, **dadurch gekennzeichnet, daß** die Plane (1) mindestens im fahrerseitigen frontseitigen Seitenbereich mindestens einen aufblähbaren, im wesentlichen horizontalen Stabilisator (16) aufweist, der über ein handbetätigbares Stabilisatorventil (SV) austrittsseitig an den Maximalwächter (Pmax) angeschlossen ist.

8. Fahrzeug nach Anspruch 7, **dadurch gekennzeichnet, daß** die Stabilisatoren (16) in solchen Planenbereichen liegen, die zwischen beabstandeten Planken (17) der Seitenwände (10, 11) des Laderaumes liegen.

9. Fahrzeug nach einem der Ansprüche 7 oder 8, **dadurch gekennzeichnet, daß** der Blähkörper (2) und die Stabilisatoren (16) jeweils über eine Kupplung (K1, K2) angeschlossen sind, die geöffnet die Zuleitung zustromseitig absperrt.

## Claims

1. Vehicle covered with a tarpaulin (1) and the said tarpaulin, which is fastened on the sides of the vehicle, beneath which an inflatable structure (2) is situated, and supported from beneath, this structure when inflated rising the middle of the tarpaulin (1), thereby tightening it and causing an inclination to the sides; this construction being realized in such a way that the underside of the inflatable structure (2) is supported by a ridge board (3) or by severeral vertical strips (3 A-C), keeping it in place underneath the original tarpaulin (1) of the loading platform, the trailer or semi-trailer; said structure being attached to a pressure limited inflating device (4) and an evacuating device (5), and operated by means of a control device (6), **characterised in that** a compressed air conduit (LP) and an evacuating conduit (VAC) connect a motorized vehicle (MFZ) via couplings (K) to the inflatable structure (2), the compressed air conduit (LP) leading via a check valve (RV) into a compressed air vessel (RES), which is connected to the control device (6) via manostats regulating minimum pressure (pmin) and maximum pressure (Pmax), said control device (6) comprising a cylinder (Z), which, when effected by vacuum (VAC), switches the device (6) to the evacuating position (5; and **in that** the compressed air vessel (RES) is also connected to the brake release lines (BRL)of the vehicle, trailer or semi-trailer via a brake regulating valve (BSV); and **in that** the minimum pressure manostat (Pmin) is set to a minimum pressure necessary to release the brakes and the maximum pressure manostat (Pmax) is set to a maximum pressure suitable to inflate the inflatable structure (2); and **in that** the capacaty of the compressed air vessel (RES) is such that, given a normal air pressure (LP) of the motorized vehicle (MFZ), it allows filling the inflatable structure (2) while maintaining the minimum pressure necessary to release the brakes.

2. Vehicle according to claim 1, **characterised in that** the inflatable structure (2) is designed as a tube extending along the ridge of the loading platform, trailer or semi-trailer.

3. Vehicle according to claim 2, **characterised in that** a protective layer (15) of fabric and/or synthetic material, foam or felt separates the tarpaulin (1) from the inflatable structure (2).

4. Vehicle according to claim 2 or 3, **characterised in that** the tarpaulin (1) is attached to the inflatable structure (2) with several straps (14) welded to the tarpaulin, or by a longitudinal welded joint.

5. Vehicle according to one of the above claims, **characterised in that** the inflatable structure (2) incorporates traction fibers (35) to stabilize it and prevent sagging.

6. Vehicle according to one of the above claims, **characterised in that** the traction fibers (35), consisting of fabric, synthetics or thin steel wires, form a spiral within the wall of the inflatable structure (2)

7. Vehicle according to one of the above claims, **characterised in that** the tarpaulin (1) has at least one inflatable, substantially horizontal stabilizer (16), situated on the lateral front of the tarpaulin on the driver's side, which is connected to the maximum pressure manostat (Pmax) by a manually operated stabilizer valve (SV).

8. Vehicle according to claim 7, **characterised in that** the stabilizers (16) are positioned on the tarpaulin in such a way that they are situated within the spaces between the Planks (17) of the side walls (10, 11).

9. Vehicle according to one of the claims 7 or 8, **characterised in that** both the connections of the inflatable structure (2) and the stabilizers (16) are couplings (K1, K2) that block the inlet when disconnected.

## Revendications

1. Véhicule avec bâche de revêtement (1) et la bâche en elle-même, celle-ci étant fixée latéralement et sous laquelle se trouve une structure gonflable (2) soutenue par en dessous, qui en état gonflé élève la bâche en son milieu et la tend tout en l'inclinant sur les côtés ; ainsi la structure gonflable (2) se trouve sous le faîte de la structure originelle de la bâche (1) du véhicule ou de la remorque, elle est soutenue par une baguette longitudinale (3) ou par des échelons transversaux (3A - 3C), elle est liée à un mécanisme d'admission (4) avec limiteur de pression et à un mécanisme d'échappement (5), tous deux réglables par un dispositif de commande (6), **caractérisé en ce qu'**une conduite d'air comprimé (LP) et une conduite de dépressurisation (VAC) relient un véhicule motorisé (MFZ) à l'aide de raccords amovibles(K) à la structure gonflable (2), que la conduite d'air comprimé (LP) va, en passant par une soupape de retenue (RV), dans un réservoir (RES) qui est donc, via un limiteur de pression minimale (Pmin) et un limiteur de pression maximale (Pmax), relié au dispositif de commande (6), lui-même raccordé à un actionneur pneumatique (Z), qui sous l'effet de la dépressurisation met le dispositif de commande (6) en position d'échappement (5), et **en ce qu'**une conduite de relâchement des freins (BRL) du véhicule ou de la remorque est aussi liée au réservoir (RES) en passant par un clapet régulateur de freinage (BSV), le limiteur de pression minimale (Pmin) étant réglé sur le niveau minimal de pression nécessaire au relâchement des freins et le limiteur de pression maximale (Pmax) étant réglé sur le niveau maximal de pression permis afin de gonfler la structure gonflable (2), et **en ce que** la capacité du réservoir (RES) permet, la pression d'air (LP) du véhicule motorisé (MFZ) étant normale, de toujours relâcher les freins après avoir rempli la structure gonflable (2).

2. Véhicule selon la revendication 1, **caractérisé en ce que** la structure gonflable (2) a la forme d'un tuyau est situé tout au long du faîte.

3. Véhicule selon la revendication 2, **caractérisé en ce qu'**entre la bâche (1) et la structure gonflable (2) se trouve une couche (15) protectrice constituée de matière textile et/ou plastique, mousse ou feutre.

4. Véhicule selon la revendication 2 ou 3, **caractérisé en ce que** la bâche est fixée à la structure gonflable (2) en toute sa longueur par une soudure longitudinale ou par plusieurs sangles (14) écartées soudés à la bâche.

5. Véhicule selon l'une des revendications précédentes, **caractérisé en ce que** la structure gonflable (2) est stabilisée par des moyens de traction (35) intégrés en son enveloppe.

6. Véhicule selon l'une des revendications précédentes, **caractérisé en ce que** les moyens de traction (35) de la structure gonflable (2) sont constituées de plastique ou de fils d'acier fines.

7. Véhicule selon l'une des revendications précédentes, **caractérisé en ce que** la bâche dispose d'au moins un stabilisateur gonflable (16) situé à la côté du conducteur au niveau de en la partie avant de la face latérale du véhicule, en position plus au moins horizontale, qui est relié au limiteur de pression maximale (Pmax) par une soupape d'action manuelle (SV).,

8. Véhicule selon la revendication 7, **caractérisé en ce que** les stabilisateurs (16) sous la bâche latérale se trouvent entre les planches écartées (17) de la face latérale (10, 11) de la soute.

9. Véhicule selon l'une des revendications 7 ou 8, **caractérisé en ce que** la structure gonflable (2) et les stabilisateurs (16) sont branchés par un raccord (K1, K2) qui barre la conduite débranchée.
